# EUROPEAN PATENT SPECIFICATION

(11) **EP 0 711 074 B1**
(45) Date of publication and mention of the grant of the patent: **21.04.1999**
(21) Application number: 95115764.3
(22) Date of filing: 02.12.1991
(51) Int. Cl.: H04N 7/16

(54) **System for the transmission and reception of encoded television signals**
System zur Übertragung und zum Empfangen von kodierten Fernsehsignalen
Système pour la transmission et réception de signaux de télévision codés

(30) Priority: 06.12.1990 IT 6797090
(43) Date of publication of application: 08.05.1996
(62) Divisional of application: 91120666.2
(73) Proprietor: EDICO S.r.l., I-00197 Roma (IT)
(72) Inventor: Dini, Roberto, I-10098 Rivoli (TO) (IT); Farina, Attilio, I-48016 Milano Marittima, Cervia (RA) (IT); Zappala, Giuseppe, I-00052 Cerveteri, Roma (IT)
(74) Representative: Notaro, Giancarlo

(56) References cited:
- EP-A- 0 233 457
- WO-A-85/00491
- WO-A-85/03830
- ELECTRONICS & WIRELESS WORLD, vol. 93, no. 1613, March 1987 pages 263-265, TOM IVALL 'Satellite systems'

## Description

The present invention refers to a system for transmitting and receiving encoded television signals, in which a television signal is encoded in order not to be received and reproduced in the normal way by normal television receivers, but only by receivers equipped with a suitable decoder, and in which the decoder includes a control circuit that receives periodically by telephone, a secret code, from a central computer. The secret code is necessary for the decoding operation.

It is known that distribution systems for television programs upon payment are used, in which the programs are distributed for example by cable, and in which the television signal undergoes coding during transmission, thus modifying the characteristics; in order to receive such signals in a satisfactory way, a receiver equipped with an opportune decoder is needed that restores the signal to its original characteristics, in order to permit that the visual and audio reproduction be realised in a satisfactory way.

A system of the type known is described by the US-A-4,916,737; it provides that a central computer be connected once a month by telephone with the decoder having an identification number and a table for decoding, to communicate a new identification number and a new table to it.

As the decoding table is valid for one month, and written in EAROM, this system can be easily subject to actions of piracy, such as copying the table.

This allows to avoid payment of the quote due for any number of other abusive decoders. In the patent it is suggested that the EAROM be obtained in the same substratum of the microprocessor, in order to make copying more difficult. This means a high increase in the cost of the apparatus, because the component must practically be manufactured by order, so in a limited number, on which the cost of the tooling is a heavy burden, and is unavoidably subjected to a high incidence of rejects.

Another inconvenient of the known system is that the telephone line must be permanently connected to the decoder upstream the normal telephone apparatus, restricting the different ways of arranging the decoder and/or of such telephone set.

The international patent application WO-A-8503830 describes a method of controlling the deciphering of an enciphered signal method wherein an order call from subscriber unit is sent via a telephone line and the deciphering key is sent back on that line for storage in that unit without requiring the subscriber to identify itself; the deciphering key delivered via the telephone may itself be enciphered.

The aim of the present invention is therefore to indicate a transmission and reception system for encoded television signals like the type described, not having a high cost, not being inconvenient for the user and presenting a high safety degree against the possibility of actions of piracy.

In order to achieve such aims, the object of the present invention consists of a system for the transmission and reception of the encoded television signals, as described in the main claim.

Further aims and advantages of the present invention will result clear in the following detailed description and enclosed drawings, supplied only as an explicative and non limiting example, in which:
Figure 1 schematically represents a system according to the invention; Figure 2 represents a block diagram of a part of the system according to invention;
Figure 3 represents a variant of the represented system in Figure 1;
Figure 4 represents a further variant of the represented system in Figure 1;
Figure 5 schematically represents the logic flow of a part of the functioning of the system of Figure 1.

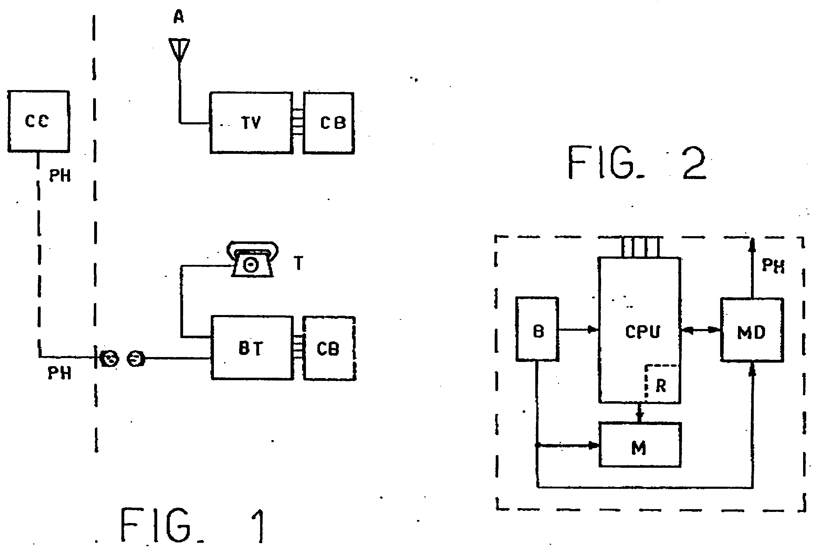

In Figure 1, that schematically represents a possible realisation of the system according to the invention, reference symbol A indicates an aerial for receiving the television signal; a television signal receiver is indicated with the symbol TV; with the CB symbol, the circuital block is indicated, making part of the television receiver TV. The block CB is removable from the television receiver TV, to which it is connected by means of a certain number of known electric connectors necessary for the exchange of feeding tensions and signals. The receiver TV is mainly of a conventional type; it includes a signal tuner, amplifier signal blocks, detectors, deflection signal generators, an image visualizer apparatus (for example a classic colour picture-tube with shadow mask), a power supply section, etc.. The CB block, that is represented in more detail in Figure 2, includes an auxiliary feeding battery pad, indicated with the reference symbol B, necessary for supplying the other circuits of the block CB when it is not connected to the receiver TV or to an other circuital block provided with a power supply circuit.

The block CB also includes a circuital control block, indicated with the symbol CPU, that represents a central process unit and can contain, in one of the preferred versions of the invention, a microprocessor; said central process unit contains at least one inside register, capable of retaining, typically, a binary data of 32 bit. The block CB also includes a non-volatile memory circuit, for example a ROM (read only memory), indicated with the reference symbol M; and a telephone modem, indicated with the reference symbol MD. The battery B is connected to all the three other blocks (CPU, M and MD); the CPU is connected to the modem MD and to the memory M; the modem MD is naturally linkable to the telephone line PH.

The block CB can be made, in a preferred form of realisation of the invention, on a printed circuit card, extractable in the known way from the TV receiver and insertable in another block, indicated in Figure 1 with the reference symbol BT, which will be dealt with later. In Figure 1 the reference symbol CC indicates a central control computer, situated in a different location from that of the receiver TV and the circuit BT.

The central computer CC is connected to the telephone PH line.

The circuit BT is also connected to the telephone line PH; it is also connected to a normal domestic telephone set, indicated with reference symbol T; as already said, the circuit BT is linkable to the circuitry block CB.

As mentioned above, Figure 2 represents a block diagram of a part of the system according to the invention, and precisely of the circuitry block CB.

The television receiver TV can receive an encoded television signal (scrambled) in such a way that it can not be received and reproduced in a normal way by normal television receivers, but only by receivers equipped with a suitable decoder; the decoder is contained in the block, and, more precisely, is made utilising the microprocessor (for example of the 16 bit type 8086, but with some registers at 32 bit) that represents the substantial part of the central process unit CPU. The instructions for operating the microprocessor are contained in the memory M, with one or more conversion tables (look up tables) that are necessary for decoding the program to be received.

The reception of the encoded programs is possible by paying a fee (that can be measured by time, for example daily, weekly or monthly) or from program to program.

To carry out the decoding operation, the microprocessor must know a secret code, that is supplied only to the users up-to-date with their payments. Said secret code can, for example, be the address of the memory M where there is the special conversion table to be utilised for the decoding of the program to be received.

The secret code, for safety reasons, is periodically changed (for example daily, in a preferred version of the invention); the central computer CC provides to call the user by phone to communicate the secret code valid up to the time of the next call. In the version represented in Figure 1, the central computer calls the user every night, between 01,00 o'clock and 5,30 A.M.; the time of the call is not known, but it is fixed every night by the computer on the bases of the sequence of the pseudocasual numbers; in this way two goals are achieved: firstly, making it difficult to try to intercept the call, and secondly, not occupying the user's telephone line during the hours in which he may need to use the phone.

If the user's line is occupied, the main computer recalls again twice, with a 15 minute interval one from to the other.

The user, every evening, before going to bed, provides to extract the card CB from the television receiver and insert it in the circuit BT connected to the telephone line, so the computer CC reaches the microprocessor of the CPU unit. The circuit BT is similar to the one described in the Italian patent application n. 67032-A B6; the computer in order to be recognised by the circuit BT effects its call in a conventional way; precisely it effects only one ring and then closes; it then leaves a 5 second space of time and then recalls; considering that the dialling of the number takes about 10 seconds, the peripheral terminal will receive the second call about 15 seconds after the first.

Therefore the conversation with the circuit BT starts.

The circuit BT, that in this type of solution includes an incorporated CMOS technology made timer to be fed by the same telephone doubled wire, on its own account, starts at 1 o'clock to disconnect for 5 seconds the telephone apparatus T every time it receives a call. In such a way the telephone bell T does not function when the computer CC calls, and the user is not disturbed; if on the other hand someone calls the user during such an interval of time, between 1,00 o'clock and 5,30, it is prepared to make the telephone ring for a long time, so the loss of one or, maximum, two rings has insignificant effects.

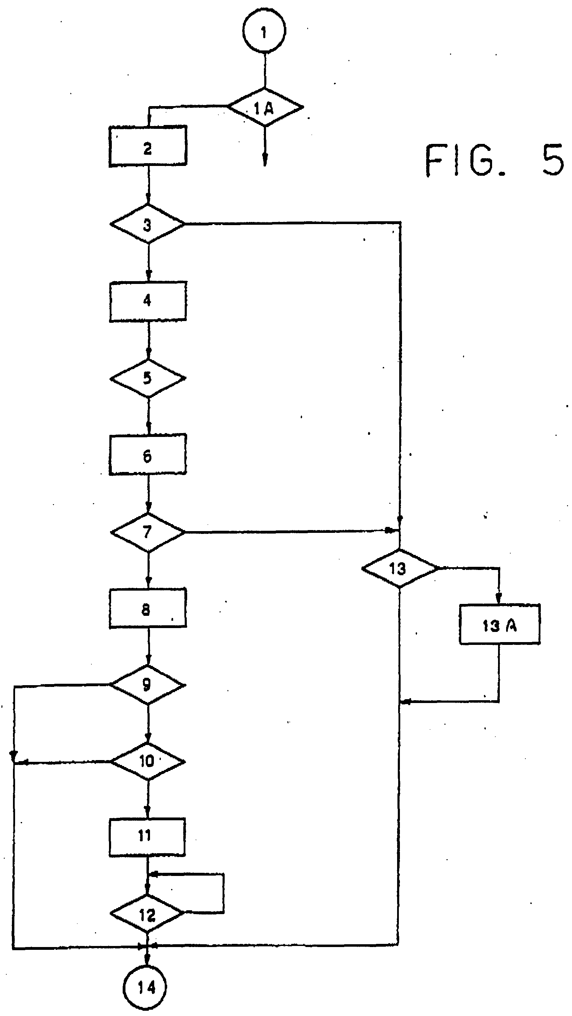

As soon as the circuit BT detects the computers CC call (recognisable because it stops after only one ring), it disconnects once again the phone T from the line PH and prepares itself to receive the next call from the central computer. During the second call, the computer asks the CPU unit its identification number, recorded in the memory M and necessary to distinguish that particular CPU from the other similar peripheral units;
after having verified that the identification corresponds to a user up-to-date with payments, and that such user has not yet received the new secret code, the central computer transmits the new code and, as soon as the peripheral unit has confirmed the reception, it closes the transmission; the circuit BT then reconnects the user's telephone. The logic flow of the call by the central computer is schematically represented in Figure 5. Block 1 is the starting block of the calling operation to such a particular user; the checking goes on to the next block 1A.

The block 1 A is a check block; it checks whether a timer has accomplished its count (that is, whether it is time to recall a user previously busy); in the affirmative case the user should be recalled.

Therefore the control operation goes on to a non represented block. as not making part of this operation; in the negative case the control goes over to block 2 (in all the check blocks the lower exit is the YES exit; the lateral exit is the NO exit).

Block 2 provides to dial the telephone number of the first user on list to which the new secret code is to be communicated.

Block 3 is a check block; it checks whether the number called is free; in the affirmative case the control passes to block 4; in the negative case the control goes over to block 13.

Block 4 provides to close the call ( to interrupt the line) after one ring; furthermore block 4 zeros the second-counter of the timer; so the control goes over to the successive block 5.

Block 5 is a check block; it checks whether 5 seconds have passed; in the affirmative case the control goes over to the successive block 6; in the negative case the control returns to block 5.

Block 6 provides to dial the number of the user again for the second call; the control therefore goes on to block 7.

Block 7 is a check block; it checks whether the number called is free; in the affirmative case the control goes over to block 8; in the negative case the control goes over to block 13.

Block 8 provides to ask the peripheral station its identification number; after receiving it, it memorises the number and passes the control to block 9.

Block 9 is a check block; it checks whether the received number is up to date with its payments; in the affirmative case the control goes over to block 10; in the negative case the control goes to block 1 4.

Block 10, is a check block; it checks whether the number received hasn't yet received its secret code; in the affirmative case (code not yet received) the control goes on to block 11; in negative case (code already received) the control goes to block 14.

Block 11 provides to transmit the new secret code, and to record in its memory that the identification number has received the new code; then the control goes over to block 12.

Block 12 is a check block; it waits for the confirmation of receipt by the peripheral station; in the affirmative case (occurred reception) the control goes over to block 14; in the negative case (reception not yet occurred) the control goes back to block 12.

Block 13 is a check block; it checks in its memory whether the user found busy before has already received another two calls; in the affirmative case the control goes to block 14; in the negative case the control goes to block 13A.

Block 13A provides to add to the memory the number of calls made to that user and starts a timer that will count up to 15 minutes and, at expiry of that time, it raises a flag (cfr.block 1A).

Block 14 is the conventional end of operation block.

For security reasons the code is transmitted in a ciphered form so that a telephone interception not be sufficient to break the secrecy; the CPU unit provides in real time to decipher the code, by means of a memorised key in the memory M, and stores the new deciphered secret code in the interior register R.

Since the interior register R is more difficult to accede to than an external memory CPU like the memory M, the secret code is, in such a way, more protected from actions of piracy; in fact a pirate needs to intercept a telephone call (being difficult as the time of call is unknown to him) and to read the memory M in order to know the decoding key of the transmitted code.

On the other hand, the fact that the central computer transmits the code only once to each user, is meant to avoid the possibility that a pirate may obtain the code by knowing an identification number in order with payments.

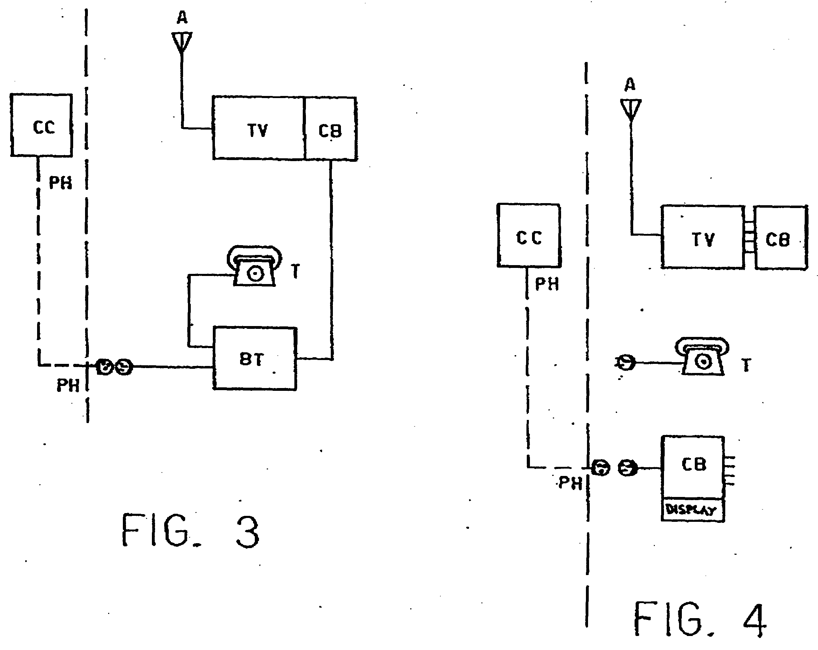

In one variation of the invention, represented in Figure 3, the circuit CB can be incorporated in the television receiver TV; in such a case even the battery B is useless; but a permanent connection is necessary between the circuit commutator BT and the circuit CB, i.e. the television receiver, to bring the telephone line to the modem incorporated within it; for the user this version is easier as he does not have to move the circuit CB between television and circuit BT, with the disadvantage that he must provide a double wire between the television and the circuit BT.

Figure 4 represents a further variation of the system represented in Figure 1; it provides that the circuit CB be equipped with a normal three-pin telephone plug and that the user detaches the telephone every night and connects in its place the circuit BT; the commutation circuit BT is in such a case useless.

This version has the drawback that the user cannot utilise the telephone at night, and therefore it may not be acceptable. An alternative is that the circuit CB, and more precisely the CPU, be able to dial the telephone number of the central computer; this way the user can move the circuit CB, connecting it to the telephone line; call the central computer, activating the call by means of a special button, in order to get the new code, and then replace the circuit CB and reconnect the telephone to the line socket.

In this last version security is decreased, due to the lack of, for the user, the uncertainty of the connection time between the central computer and the peripheral unit; so the fact that the computer transmits the code only once to each user is of vital importance.

It can be suitable that the number of the central computer be a toll free number and that the memory M, associated to said microprocessor already contains said toll free number to call the central computer and obtain the new secret code from it. It can also be provided that said microprocessor controls a visual indicator ( display ) indicating whether for that day the new secret code has already been inserted and for how long it will be valid; in such a case the microprocessor, besides memorising the new code, also provides to memorise the date and the expiry time.

Naturally it is advisable not to constantly change the secret code at fixed intervals.

The characteristics of the described system become clear from the description outlined and from the annexed drawings.

In the outlined description the advantages of the system object of the present invention are also clear.

In particular they are represented by the fact that the secretness of the code is protected in the best way possible.

It is clear that many variants can be introduced by the skilled technician, both to the system and to the devices described as an example, without going beyond the scope of the innovating principles inherent to the invention.

## Claims

1. A system for the transmission and reception of encoded television signals, in which a television signal is encoded in order not to be received and reproduced in the normal way by normal television receivers, but only by receivers equipped with a suitable decoder, and in which the decoder includes a control circuit that receives, by telephone, a secret code from a central computer, the secret code being necessary for the decoding operation, and being transmitted by means of a ciphered procedure, characterised in that said code is periodically changed at random intervals by the central computer, which provides accordingly to call the user unit by telephone to communicate the new secret code.

2. A system for the transmission and reception of encoded television signals, according to claim 1, characterised by the fact that the secret code is transmitted in code and that the key to decipher said secret code is contained in a memory (M) associated to a control circuit ( CPU ).

3. A system for the transmission and reception of encoded television signals, according to claim 2, characterised by the fact that said control circuit ( CPU ) receives said secret ciphered code from the telephone line ( PH ), deciphers it in real time, utilising said key, and keeps it memorised in special interior register (R).

4. A system for the transmission and reception of encoded television signals, according to claim 1, characterised by the fact that said system provides a defined protocol for the said central computers (CC) call and a device (BT), associated to the telephone line (PH), inserted upstream from the normal home telephone set (T) and equipped with means for detecting the call of the central computer (CC) and to exclude for the duration of such call the home telephone set (T).

5. A system for the transmission and reception of encoded television signals, according to claim 4, characterised by the fact that said protocol provides for said central computer (CC) making a one or two ring call, then to disconnect and recall after 15 seconds to transmit said secret code.

6. A system for the transmission and reception of encoded television signals, according to claim 4 or 5, characterised by the fact that said device (BT), connected to the telephone line, provides to detach the user's telephone (T) for a certain number of seconds on each incoming call, so as the user not be disturbed by the call of the central computer (CC).

7. A system for the transmission and reception of encoded television signals, according to one of the previous claims, characterised by the fact that the call of said central computer (CC) in order to change said secret code is effectued once a day, during nocturnal hours.

8. A system for the transmission and reception of encoded television signals, according to one of the previous claims, characterised by the fact that said central computer (CC), recalls back twice, with intervals of 15 minutes, if the user line (PH) results to be busy.

9. A system for the transmission and reception of encoded television signals, according to claim 7, characterised by the fact that said call is carried out between 1 o'clock and 05:30 A.M..

10. A system for the transmission and reception of encoded television signals, according to claim 7, characterised by the fact that said device (BT), connected to the telephone line, includes an interior timer, eventually made with CMOS technology, fed by the doubled telephone wire (PH) itself.

11. A system for the transmission and reception of encoded television signals, according to claim 10, characterised by the fact that said timer provides to define the nocturnal hours, during which said device (BT), associated to the telephone line, detaches the user's telephone (T) for a certain number of seconds on every incoming call, so as the user not be disturbed by the central computers (CC) call.

12. A system for the transmission and reception of encoded television signals, according to claim 9, characterised by the fact that said call, destined to a certain user, is carried out everyday at a different time, that is defined on the grounds of a sequence of pseudocasual numbers.

13. An apparatus for the reception of encoded television signals, according to the system of any of the previous claims.

## Patentansprüche

1. System für das Übertragen und Empfang von codierten Fernsehsignalen, in welchem ein Fernsehsignal codiert ist, um nicht auf dem normalen Weg, durch normale Fernsehempfänger empfangen und wiedergegeben zu werden, sondern nur von Empfängern, die mit einem geeigneten Decoder ausgestattet sind, und in welchem der Decoder einen Steuerschaltkreis aufweist, welcher durch ein Telefon einen Geheimcode von einem Zentralrechner empfängt, wobei der Geheimcode für die Decodieroperation notwendig ist, und durch Einrichtungen eines Chiffrierverfahrens übertragen wird, dadurch gekennzeichnet, daß der Code periodisch in willkürlichen Intervallen durch den Zentralrechner geändert wird, welcher entsprechend dafür sorgt, die Benutzereinheit durch ein Telefon anzurufen, um den neuen Geheimcode mitzuteilen.

2. System für das Übertragen und Empfang von codierten Fernsehsignalen nach Anspruch 1, gekennzeichnet durch dic Tatsache, daß der Geheimcode codiert übertragen wird, und daß der Schlüssel, um den Geheimcode zu dechiffrieren in einem mit einem Steuerschaltkreis (CPU) verbundenen Speicher (M) enthalten ist.

3. System für das Übertragen und Empfang von codierten Fernsehsignalen nach Anspruch 2, gekennzeichnet durch die Tatsache, daß der Steuerschaltkreis (CPU) den chiffrierten Geheimcode von der Telefonleitung (PH) empfängt, ihn in Echtzeit dechiffriert, wobei er den Schlüssel benutzt und ihn in einem speziellen inneren Register (R) gespeichert hält.

4. System für das Übertragen und Empfang von codierten Fernsehsignalen nach Anspruch 1, gekennzeichnet durch die Tatsache, daß das System ein festgelegtes Protokoll für den Zentralrechner-(CC)-Anruf aufweist und eine Vorrichtung (BT), welche mit der Telefonleitung (PH) zugeordnet ist, stromaufwärts von dem normalen Haustelefonapparat (T) eingefügt ist und mit Einrichtungen ausgestattet ist, um den Anruf des Zentralrechners (CC) zu erfassen und um für die Dauer eines solchen Anrufs den Haustelefonapparat (T) auszuschließen.

5. System für das Übertragen und Empfang von codierten Fernsehsignalen nach Anspruch 4, gekennzeichnet durch die Tatsache, daß das Protokoll für den Zentralrechner (CC) vorsieht, einen Ein- oder Zweitonanruf zu machen, dann die Verbindung zu lösen und nach 15 Sekunden wieder zurückzurufen, um den Geheimcode zu übertragen.

6. System für das Übertragen und Empfang von codierten Fernsehsignalen nach Anspruch 4 oder 5, gekennzeichnet durch die Tatsache, daß die Vorrichtung (BT), verbunden mit der Telefonleitung, dafür sorgt, das Telefon (T) des Benutzers für eine gewisse Anzahl von Sekunden jedes ankommenden Anrufs abzutrennen, damit der Benutzer nicht durch den Anruf des Zentralrechners (CC) gestört wird.

7. System für das Übertragen und Empfang von codierten Fernsehsignalen nach einem der vorhergehenden Ansprüche, gekennzeichnet durch die Tatsache, daß der Anruf des Zentralrechners (CC), um den Geheimcode zu ändern, einmal am Tag während der Nachtstunden ausgeführt wird.

8. System für das Übertragen und Empfang von codierten Fernsehsignalen nach einem der vorhergehenden Ansprüche, gekennzeichnet durch die Tatsache, daß der Zentralrechner (CC) zweimal mit Intervallen von 15 Minuten zurückruft, wenn die Benutzerleitung (PH) sich als besetzt erweist.

9. System für das Übertragen und Empfang von codierten Fernsehsignalen nach Anspruch 7, gekennzeichnet durch die Tatsache, daß der Anruf zwischen 1 Uhr und 05:30 a.m. durchgeführt wird.

10. System für das Übertragen und Empfang von codierten Fernsehsignalen nach Anspruch 7, gekcnnzeichnet durch die Tatsache, daß die mit der Telefonleitung verbundene Vorrichtung (BT) einen inneren Zeitgeber aufweist, der eventuell mit CMOS-Technologie hergestellt ist, und durch den doppelten Telefondraht (PH) selbst gespeist wird.

11. System für das Übertragen und Empfang von codierten Fernsehsignalen nach Anspruch 10, gekennzeichnet durch die Tatsache, daß der Zeitgeber dafür sorgt, die Nachtstunden zu definieren, während welcher die mit der Telefonleitung verbundene Vorrichtung (BT) das Benutzertelefon (T) für eine gewisse Anzahl von Sekunden bei jedem eingehenden Anruf abtrennt, damit der Benutzer nicht durch den Anruf des Zentralrechners (CC) gestört wird.

12. System für das Übertragen und Empfang von codierten Fernsehsignalen nach Anspruch 9, gekennzeichnet durch die Tatsache, daß der für einen bestimmten Benutzer bestimmte Anruf jeden Tag zu einer anderen Zeit, welche auf der Grundlage einer Folge von pseudozufälligen Zählen definiert wird, ausgeführt wird.

13. Vorrichtung für das Empfangen von codierten Fernsehsignalen, entsprechend dem System von irgendeinem der vorhergehenden Ansprüche.

## Revendications

1. Système d'émission et de réception de signaux de télévision codés, dans lequel un signal de télévision est codé pour ne pas pouvoir être reçu et reproduit de manière normale par des récepteurs de télévision normaux, mais seulement par des récepteurs équipés d'un décodeur approprié, et dans lequel le décodeur comporte un circuit de commande qui reçoit, par téléphone, un code secret de la part d'un ordinateur central, le code secret étant nécessaire à l'opération de décodage, et étant transmis au moyen d'une procédure chiffrée, caractérisé en ce que ledit code est périodiquement modifié, à des intervalles aléatoires, par l'ordinateur central, lequel fait par conséquent en sorte d'appeler l'unité utilisatrice par téléphone pour communiquer le nouveau code secret.

2. Système d'émission et de réception de signaux de télévision codés, selon la revendication 1, caractérisé par le fait que le code secret est transmis sous forme codée et que la clé de déchiffrage dudit code secret est contenue dans une mémoire (M) associée à un circuit de commande (CPU).

3. Système d'émission et de réception de signaux de télévision codés, selon la revendication 2, caractérisé par le fait que ledit circuit de commande (CPU) reçoit ledit code secret chiffré en provenance de la ligne téléphonique (PH), le déchiffre en temps réel, à l'aide de ladite clé, et le garde en mémoire dans un registre interne spécial (R).

4. Système d'émission et de réception de signaux de télévision codés, selon la revendication 1, caractérisé par le fait que ledit système fournit un protocole défini pour la communication dudit ordinateur central (CC), ainsi qu'un dispositif (BT), associé à la ligne téléphonique (PH), qui est inséré en amont du poste téléphonique normal (T) de l'utilisateur et est équipé de moyens permettant de détecter la communication de l'ordinateur central (CC) et d'exclure, pendant la durée de ladite communication, le poste téléphonique (T) de l'utilisateur.

5. Système d'émission et de réception de signaux de télévision codés, selon la revendication 4, caractérisé par le fait que ledit protocole prévoit que ledit ordinateur central (CC) fasse un appel d'une ou deux sonnerie, puis raccroche et rappelle après 15 s pour transmettre ledit code secret.

6. Système d'émission et de réception de signaux de télévision codés, selon la revendication 4 ou 5, caractérisé par le fait que ledit dispositif (BT), connecté à la ligne téléphonique, agit de façon à déconnecter le téléphone (T) de l'utilisateur pendant un certain nombre de secondes à chaque communication entrante, afin que l'utilisateur ne soit pas dérangé par la communication de l'ordinateur central (CC).

7. Système d'émission et de réception de signaux de télévision codés, selon l'une quelconque des revendications précédentes, caractérisé par le fait que la communication dudit ordinateur central (CC) visant à changer ledit code secret s'effectue une fois par jour, pendant les heures de la nuit.

8. Système d'émission et de réception de signaux de télévision codés, selon l'une quelconque des revendications précédentes, caractérisé par le fait que ledit ordinateur central (CC) rappelle deux fois, à intervalles de 15 min, si la ligne (PH) de l'utilisateur est occupée.

9. Système d'émission et de réception de signaux de télévision codés, selon la revendication 7, caractérisé par le fait que ladite communication est effectuée entre 1 h et 5 h 30 min du matin.

10. Système d'émission et de réception de signaux de télévision codés, selon la revendication 7, caractérisé par le fait que ledit dispositif (BT) connecté à la ligne téléphonique comporte une minuterie interne, éventuellement réalisée en technologie CMOS, qui est alimentée par le fil téléphonique doublé (PH) lui-même.

11. Système d'émission et de réception de signaux de télévision codés, selon la revendication 10, caractérisé par le fait que ladite minuterie agit pour définir les heures nocturnes, pendant lesquelles le dispositif (BT) associé à la ligne téléphonique déconnecte le téléphone (T) de l'utilisateur pendant un certain nombre de secondes à chaque communication entrante, de façon que l'utilisateur ne soit pas dérangé par la communication de l'ordinateur central (CC).

12. Système d'émission et de réception de signaux de télévision codés, selon la revendication 9, caractérisé par le fait que ladite communication, destinée à un certain utilisateur, est effectuée chaque jour à une heure différente, laquelle est définie sur la base d'une séquence de nombres pseudofortuits.

13. Appareil de réception de signaux de télévision codés, selon le système de l'une quelconque des revendications précédentes.
